# EUROPEAN PATENT APPLICATION

(11) **EP 1 265 451 A2**
(43) Date of publication of application: **11.12.2002**
(21) Application number: 02011672.9
(22) Date of filing: 31.05.2002
(51) Int. Cl.: H04Q 11/00

(54) **Architecture for a photonic transport network**

(30) Priority: 07.06.2001 US 876391
(71) Applicant: Innovance Inc., Piscataway, NJ 08854 (US)
(72) Inventor: Roorda, Peter D., Ottawa, Ontario K1Y 1B9 (CA); Solheim,Alan G, Sittsville, Ontario K2S 1C9 (CA); Penz,Gregory M., Kanata, Ontario K2K 2L7 (CA); Lim, Hock G., Green Brook, New Jersey 08812 (US); Emery, Jeffrey K., Ottawa, Ontario K2J 3Z3 (CA); Somani,Azmina, Nepean, Ontario K2G 6B4 (CA); Wight, Mark G., Ottawa, Ontario K1S 4Y5 (CA); May,Gregory D., Ottawa, Ontario K2B 5Y3 (CA); Frodsham, James, Manotik, Ontario (CA); Nicholson,David J., Ottawa, Ontario K1H 6K8 (CA)
(74) Representative: Cutforth, Peter Nicholas

(57) **Abstract**

The architecture for a photonic transport network 20 provides for separation of passthru channels 8 form the drop channels 9 at the input of a switching node 20-1. A wavelength switching sub-system 10 switches the passthru channels 8, without OEO conversion. The drop channels 9 are directed to broadband receiver of choice using a broadcast and select drop tree 91. The add channels 91 are inserted at the output side of the node 20-1, using tunable transponders. In addition, a passthru channel 8 may be OEO converted if signal conditioning and/or wavelength conversion are necessary. The transponders 23, regenerators 24 and transceivers 27 are not wavelength specific, allowing flexible and scaleable network configurations. This structure provides for fast provisioning of new services and 'class of service' compliant failure recovery.

## Description

The invention is directed to a telecommunication network, and in particular to a architecture for a photonic transport network.

Expansion of long haul optical communication networks has been fueled by data traffic, and is estimated to be in the order of 70-150%. Particularly, since the popularity of the World Wide Web has enabled business transactions over the Internet, IP (Internet Protocol) and IP-based services have grown and evolved dramatically.

The flexibility (agility) of the current network comes at the expense of cost and scalability. Network flexibility is delivered electronically, and thus requires termination of photonic layer, using optical-electrical-optical (OEO) interfaces. 65-70% of nodal OEO is for managed pass-thru, or so called 'hidden regenerators' or 'hidden regens'. There is a need to improve network scalability and to eliminate unnecessary input/output occurrences. There is also a need to improve the agility and flexibility of the network while eliminating/reducing the number of hidden regenerators.

Today, service activation time, or "time to bandwidth" (TTB), or "time-to-service" (TTS) is constrained by the physical network layer (dense wavelength division multiplexed D/WDM for optical networks) using point-to-point (pt-pt) connectivity. Cost and TTB reduction seem to be mutually exclusive for this type of connectivity. There is a need to disassociate these two parameters to fully utilize the benefits of WDM.

Also, network engineering and planning are currently very complex, time consuming and thus expensive. For example, there are approximately 400 card types per vendor to be installed at a node, due to the cards being wavelength specific. There are three types of networks (access, metro and transport) each with off-line planning. This results in growing nodal connection complexity, which results in increased network management complexity, and scalability problems. As well, the system turn-up grows more and more complex, involving extensive simulation, engineering and testing. There is a need to simplify network engineering and planning.

It is an object of the invention to provide a architecture for an optical network, which alleviates totally or in part the drawbacks of the prior art network architectures.

It is another object of the present invention to provide a network architecture that leverages emerging technologies in ultra-long reach transmission, photonic switching and network control and signaling.

Accordingly, the invention provides a WDM network for routing a channel from an input node to an output node through an intermediate switching node connected along a transmission path, comprising: at the input node, means for multiplexing the channel into a first multi-channel optical signal and transmitting the first multi-channel optical signal over the path; at the intermediate node, a wavelength switching subsystem WSS for routing the channel from the first multi-channel optical signal into a second multi-channel optical signal without OEO conversion, and transmitting the second multi-channel optical signal over the path; and at the output node, means for demultiplexing the channel from the second multi-channel optical signal.

In addition, the invention is concerned with a node of a WDM network comprising: an input port for receiving a first multi-channel optical signal, and an output port for transmitting a second multi-channel optical signal; a broadband optical receiving terminal for receiving a drop channel and recovering a drop user signal from the drop channel; a drop tree for broadcasting the first multi-channel optical signal over a plurality of drop routes, selecting a drop route and routing the drop channel from the input port to the broadband optical receiving terminal; and a wavelength switching subsystem WSS for routing a passthru channel from the first multi-channel optical signal into the second multi-channel optical signal, in optical format.

According to a further aspect, the invention provides a method of routing a communication channel from an input node to an output node through an intermediate switching node connected along a path comprising: at the input node, multiplexing the channel into a first multi-channel optical signal and transmitting the first multi-channel optical signal to the intermediate node; at the intermediate node, switching the channel from the first multi-channel optical signal into a second multi-channel optical signal without OEO conversion, and transmitting the second multi-channel optical signal to the output node; at the output node, demultiplexing the channel from the second multi-channel optical signal; and controlling operation of the input node, the output node and the intermediate node at the physical layer using a smart line system SLS and at the network layer using an intelligent network operating system INOS.

Furthermore, the invention provides a method of adding a new channel between the input node and a second output node connected on the path downstream from the intermediate node, comprising establishing a target reference path and setting-up the performance parameters for the reference path and threshold values for the performance parameters; connecting a new input client interface to the input node and connecting a new output client interface to the second output node; remotely requesting activation of the new channel by a point and click operation on a graphical user interface GUI of the intelligent network operating system; at the INOS, attempting to establishing a direct all optical route for the new channel, based on current network topology information and current optical layer performance information; providing wavelength conversion at the intermediate node, if the direct all optical route is not available; providing signal regeneration if the direct all optical route is available, but current optical layer performance information indicates that an updated optical layer performance for the new channel falls below the threshold values; and lighting the optical path by wavelength tuning a transmitter at the new interface and appropriate switching at the intermediate node, under supervision of the INOS.

The WDM network further comprises an optical trace sub-system distributed at the optical amplification modules and at the nodes for gathering network topology information, and a trace connection for communication network topology information between the optical amplification modules and the network nodes. The trace connection is provided along a distinct optical trace channel.

Preferably, the wavelength of the optical trace channel is about 1310nm.

The trace channel may travel on a tandem fiber along said path or may be multiplexed with the multi-channel optical signal.

Advantageously, the network according to the invention offers low cost per bit, high density of traffic, scalability and flexibility. The network according to the invention also provides simpler network engineering and planning, and thus much shorter time to service. Among the main characteristics of this network are end-to-end photonic mesh network optical connection provisioning without craft intervention, photonic switching, switch-able regeneration, full transmitter wavelength agility, photonic layer wavelength UNI; distributed signaling and routing layer, etc.

The foregoing and other objects, features and advantages of the invention will be apparent from the following more particular description of the preferred embodiments, as illustrated in the appended drawings, where:
**Figure 1A** shows node spacing distribution of North American transport networks;
**Figure 1B** illustrates the time-to-bandwidth breakdown;
**Figure 1C** shows the pass-thru proportion of traffic;
**Figure 2A** shows a span of a switched optical network using electrical cross-connects;
**Figure 2B** is an example of a network as in Figure 2A, for showing the steps effected for lighting a wavelength;
**Figure 3A** illustrates the principle of operation of the photonic transport network according to the invention;
**Figure 3B** illustrates the steps effected for lighting a wavelength in the network of Figure 3A;
**Figure 4** shows a high level view of a junction site of network of Figure 3A;
**Figures 5A-5C** show the electro-optics sub-system, where Figure 5A illustrates a block diagram of the electro-optics subsystem, Figure 5B is the block diagram of a transponder, and Figure 5C is the block diagram of a regenerator;
**Figures 6A-6D** illustrate the optical line sub-systems, where Figure 6A shows a line amplifier configuration, Figure 6B illustrates a OADM configuration; Figure 6C shows a wavelength cross-connect configuration; and Figure 6D illustrates a line amplifier configuration with optical spectrum analyzer equipment;
**Figure 7** illustrates the access sub-system for multiplexing, demultiplexing and switching;
**Figures 8A-8D** illustrate wavelength cross-connect configurations, where Figure 8A shows a two-way cross-connect architecture; Figure 8B shows a three-way cross-connect architecture; Figure 8C shows a four-way cross-connect architecture; and Figure 8D shows a five-way cross-connect architecture; and
**Figure 9** shows an OADM configuration.

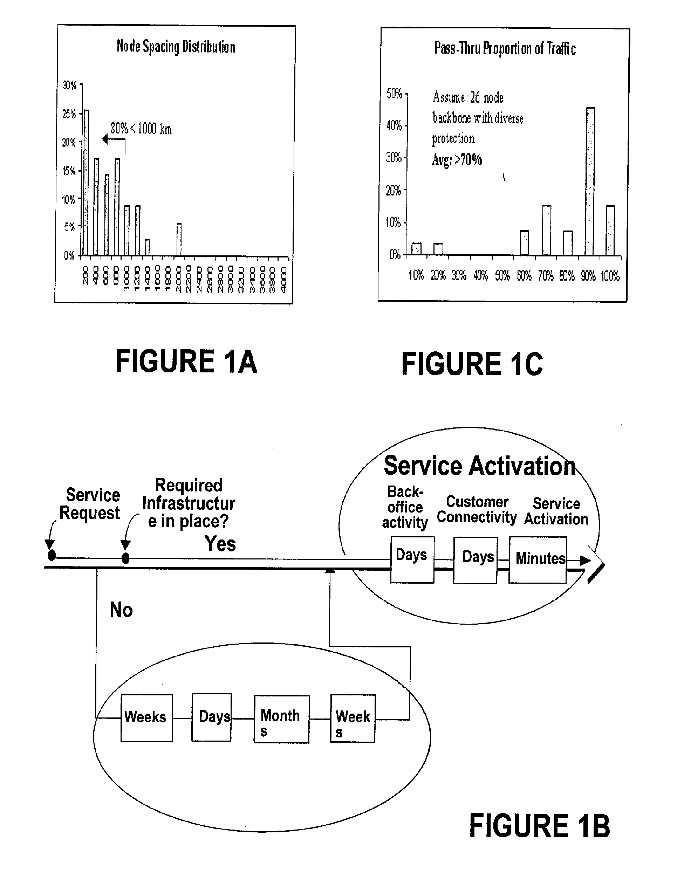

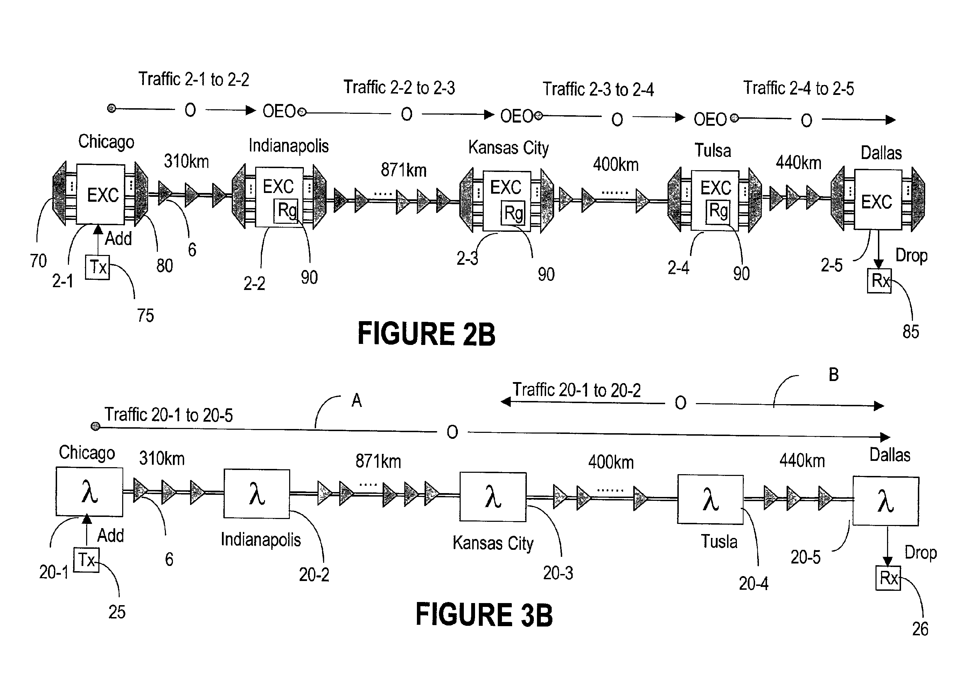

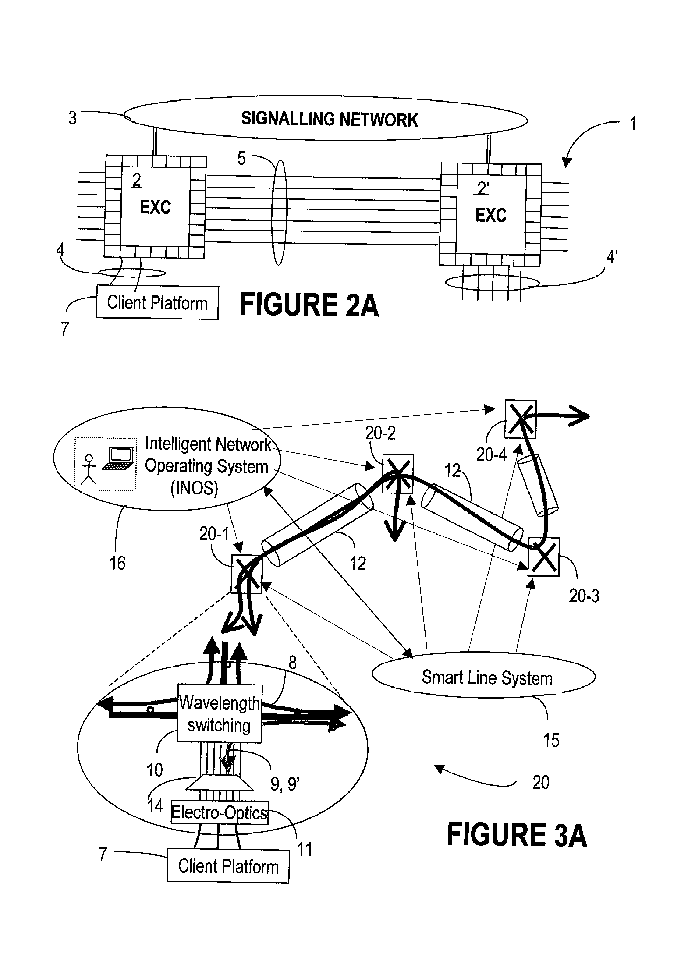

First, the current optical networking environment is described in some detail with reference to Figures 1A, 1B, 1C, 2A and 2B for a better understanding of the structure, characteristics and operation of the network architecture according to the invention.

The North American nationwide backbones typically service about 100 cities, on about 20,000 route-miles of fiber. However, most of the high-bandwidth connections on the national backbone occur between 20-30 of the largest cities. Figure 1A shows the node spacing distribution for North America. It is to be noted that the spacing between two nodes is less than 1000km for 80% of nodes. The mean distance between nodes in the pan-European backbones is 400km only. A typical pan-European network covers about 50 cities with approximately 13,000 route-km of fiber.

The number of backbone providers increased lately, resulting in important decreases in the profit margin. As a result, service provider business has evolved to a point where the winning factor is the quality of the services offered, and also the time it takes to set up new services. Today, a typical waiting time for a new optical service is over 120 days. As seen in Figure 1B, TTB includes two components, the network engineering time and the service activation time. If the equipment required to provision a new service is in place, TTB comprises only the service activation time, which is relatively low, being mainly limited by the carrier's own processes. It is dependent on extend of back office activity (days), the time for connecting the equipment (days), and the time needed for activating the service (minutes).

On the other hand, if the equipment required to provision a new service is not in place, TTB is much larger. Deploying a new service depends upon network capacity planning, network engineering, and most importantly, the time it takes to order and deliver specific wavelengths equipment for network capacity deployment. As a result, the TTB for new services is very long, often in the order of months. If this "time-to-bandwidth" (TTB) could be reduced, a carrier would have a significant competitive advantage.

Carriers looked to DWDM to solve this problem. Unfortunately several practical factors prevent carriers from truly utilizing this value. Thus, due to the high number of channels per fiber (up to 160 channels) the engineering time associated with circuit provisioning has increased significantly. In addition, current DWDM systems can only be provisioned in a point-to-point (pt-pt) configuration, the interconnection between the nodes requiring management at wavelength level. To make matters worse, no automation of the engineering process was developed yet. Each wavelength must be ordered, deployed and engineered separately. In addition, the cost of the OEO interfaces feeding the DWDM pipes is very high, and grows with each new wavelength.

As a result of these factors, the true potential of DWDM continues to be unexploited, and the engineering effort continues to grow, while the average TTB of an optical service continues to increase.

The current push to bring agility to the network relies on the use of large electrical cross-connects (EXC) or switches, which depend on OEO conversion to interface with WDM systems at nodal management sites. Figure 2A shows two nodes **2, 2'** of a point-to-point switched optical network (SON) **1** using electrical cross-connects. A signaling network **3** distributes topology and routing information to all nodes across the network. EXCs provide the base interconnection and provisioning fabric for the optical connections.

One of the fundamental aspects of the SON architecture of Figure 2A is the idea of a user network interface UNI **4, 4'** to the optical layer client platforms. UNIs **4, 4'** allow the client to signal the need for a new bandwidth connection directly to the optical network, which can then provision the circuit across the network. The result is fast provisioning if the network equipment is in place. In order to optimize the DWDM resources, the SON uses a NNI (Network to Network Interface) layer shown at **5.** However, current NNI protocols tend to be proprietary and static, preventing the added value of agile configuration of the DWDM layer.

Figure 2B shows the steps involved for lighting a wavelength (or lambda, or channel) between two cities, e.g. Chicago and Dallas. There are five nodes illustrated, namely nodes **2-1** at Chicago, node **2-2** at Indianapolis, node **2-3** at Kansas city, node **2-4** at Tulsa, and node **2-5** at Dallas. The nodes comprise, in very broad terms, a large cross-connect EXC **2,** a demultiplexer unit **70** and a multiplexer unit **80.** Node **2-1** is equipped with a transmitter **75** for converting the client signal to an optical signal, and node **2-5** is equipped with a receiver **85** for terminating the optical signal and converting it to the client signal. Intermediate nodes **2-2, 2-3** and **2-4** need to be equipped with 'hidden regens' **90** to enable switching of the client signal in electronic format. Thus, the optical signal needs to be terminated at each intermediate node, as shown by the arrows above the nodes. Figure 2B shows a unidirectional WDM transmission system, but similar considerations apply to bidirectional systems.

All channels sourced at node **2-1** for node **2-5** co-propagate between the nodes along the same physical medium (same fiber), so that they will experience similar distortion, decline in power, optical signal-to-noise (OSNR) degradation, etc. As such, power and OSNR channel equalization can be performed on a span-by-span basis.

The distance between nodes **2-1** and **2-5** is 2,200km, and the lengths of the respective links (distances between the cities/nodes) along the signal path are as shown on Figure 2B. There are optical amplification sites between the nodes, equipped with optical amplifiers **6.** The number of these sites depends mainly on the respective distance. Thus, the number of optical amplifier sites is greater between nodes **2-2** (Indianapolis) and **2-3** (Kansas City) than between nodes **2-1** (Chicago) and **2-2.** The following are the steps currently performed to add a channel:
(a) Provision/select two DWDM transmitter/receiver (Tx/Rx) units at every site, tuned for the respective channel. If the Tx/Rx are not part of the existing inventory, they must be ordered and installed.
(b) Engineer nodes **2-1** and **2-2** for the new wavelength.
(c) Increase laser power of the node **2-1** transmitter gradually, while monitoring the other wavelengths present on the line between **2-1** and **2-2.**
(d) Perform a power adjustment at each optical amplifier site **6** (variable optical attenuator VOA adjustment).
(e) Once link **2-1** to **2-2** is equalized, run a 72 BER test.
(f) Repeat steps (a) to (e) for the remaining spans **2-2** to **2-3**; **2-3** to **2-4;** and **2-4** to **2-5.**
(g) Establish all cross-connections at the respective EXCs **2,** for each node.
(h) connect the client interfaces at the end sites.

As indicated above, this process takes 6 to 20 weeks and requires a large number of specialized personnel (engineers and technicians).

SON **1** is currently the object of standard activities. ODSI, a consortium of vendors led by Sycamore Systems has started defining a standard around a UNI interface. The OIF is also involved in ODSI for UNI standards activities. ASON, a standard supported by Nortel Networks and Lucent Technologies is being worked on in T1X1 as well as ITU.

Nonetheless, switching in SON **1** is performed in the electrical domain, so that all channels (wavelengths) need to be converted from the optical to the electrical domain before switching, and converted back to the optical domain after switching. As OEO conversion is very expensive, the cost of the EXCs nodes represents an important part of the cost of the entire network. While OEO conversion is needed to access the optical layer at the transmit and receive ends (nodes **2-1** and node **2-5** in the example of Figure 2A), when they are used as 'hidden regens' **90** to manage traffic passthru traffic, the network economics are negatively impacted.

Another current trend in optical communication is to extend the system reach. Thus, these ultra long reach (ULR) systems require less or no intermediate OEO regeneration points, and so, less OEO interfaces. Unfortunately, this trend does not map very well in practice to the current network topology. To start, the current network is still based on a pt-pt architecture, as shown in Figures 2A and 2B. This means that since the distance between most nodes is under 1,000km, ULR benefits only 20% of links which are over 1,000km. Also, as the majority of connections have distance requirements exceeding the nodal spacing of 1000km, more than 70% of traffic at nodal sites tends to be pass-thru, as shown in Figure 1C. This means that 70% of nodal OEO interfaces exist strictly for the management of traffic passing through the node. While this is a very important function as it allows the carrier to provision traffic faster throughout the network, a significant opportunity exists for network cost reduction if some or all of these interfaces could be eliminated.

A pt-pt architecture inherently uses wavelength-specific equipment resulting in a very complex node structure. For example, for an average 2.5 Tb/s 3-way node (add/drop and passthru node), the equipment includes 20 bays and approximately 150 circuit pack types. The power consumed by such a node is in the order of 50kW.

Figure 3A illustrates a network **20** according to the invention. Network **20** is a photonic network, leveraging emerging technologies in ultra-long reach transmission, photonic switching, and network control and signaling. This network provides end-to-end photonic mesh network optical connection provisioning, without craft intervention.

The architecture of a node, such as node **20-1** is shown in the insert. The nodes provided with the ability to switch a channel from an input fiber to an output fiber of choice, and to add/drop traffic are also called flexibility points or switching nodes. A flexibility point may be provided with add/drop capabilities, or not. A flexibility point may also be a terminal used for add, drop or add/drop only.

As intuitively shown, the add/drop traffic **9** travels on a separate path than the passthru traffic **8.** As a result, the passthru traffic can be routed without OEO conversion, so that no Tx/Rx pairs need to be provisioned for the passthru traffic **8.** Furthemore, the add/drop traffic **9, 9'** is provided with tunable transmitters (Tx) and broadband receivers (Rx), which are non-wavelength specific (they are colorless). The colorless DWDM characteristic of the network **20** results in less complexity at the nodes than in network **1** of Figure 2A. Node **20-1** for example can be accommodated in five bays, using approximately 20-25 types of card packs. The total power consumed by such a node is approximately 9 kW.

The term 'optical link' is used herein to define the connection between two flexibility points. The term 'span' defines the connection between two adjacent optical amplifier sites, and the term 'path' is used to define an end-to-end connection.

Network **20** is also provided with an intelligent network operating system INOS **16,** which enables photonic constrained wavelength routing, network auto-discovery and self-test, capacity and equipment forecasting and network optimization capabilities. The INOS **16** includes integrated engineering /planning tools, which allow significant reduction of the TTB. In addition, a smart line system SLS **15** provides embedded photonic layer monitoring, to confer to network **20** adaptive power and dispersion control, and monitoring of the photonic layer and feeds this information to the INOS **16.** Based on this real time line performance information, on thresholds preset for the monitored parameters and on the performance of the network equipment, INOS **15** decides if a channel needs regeneration or wavelength conversion, or decides on an alternative path for a channel for traffic optimization.

Figure 3B illustrates the steps effected for lighting a wavelength in a network **20** according to the invention. Node **20-1** is equipped with a tunable optical transmitter **25** and node **20-5,** with a broadband optical receiver **26,** directly connected along a channel(s) that passes through intermediate nodes **20-2, 20-3** and **20-4** in optical format as shown by arrow **A.** A channel(s) traveling between nodes **20-3** and **20-5** for example, shown by arrow **B,** co-propagates along the same fiber with channel **A** on the spans between nodes **20-3** to **20-4** and **20-4** to **20-5.** As the length of these channels is different, only power equalization can be effected on the common spans; OSNR equalization will unnecessary degrade the shorter channel.

It is to be noted that while the number of optical amplifier units for each span may remain similar with that of network of Figure 2B, the complexity of each node is significantly reduced as discussed.

Thus, the steps needed for lighting a wavelength in photonic network **20** are:
- First, connect the client interfaces **7** to the flexibility point **20.**
- Next, activate the wavelength from a network operating center NOC, which involves a simple point and click operation.
- INOS **16** and SLS **15** administer the automatic activation of the service, which takes seconds.

It is readily apparent that the TTB is significantly reduced as compared to the complexity of lighting a wavelength in network **1**. In addition, aggressive FEC (Forward Error Correction) guarantee of five 9's in less than one second is provided for network **20.**

Network **20** may be partitioned into the following fundamental building blocks, shown in Figure 3A, which function together or in some applications independently: a wavelength switching subsystem **10,** an access multiplexing and switching sub-system **14** provided at flexibility points such as node **20-1**, an electro-optics sub-system **11** provided at the node or on client's platform, and an optical line sub-system **12** provided on the links between the network nodes for conditioning the optical DWDM signal(s). Equipment for optical signal conditioning is also provided at the input and output sides of each node.

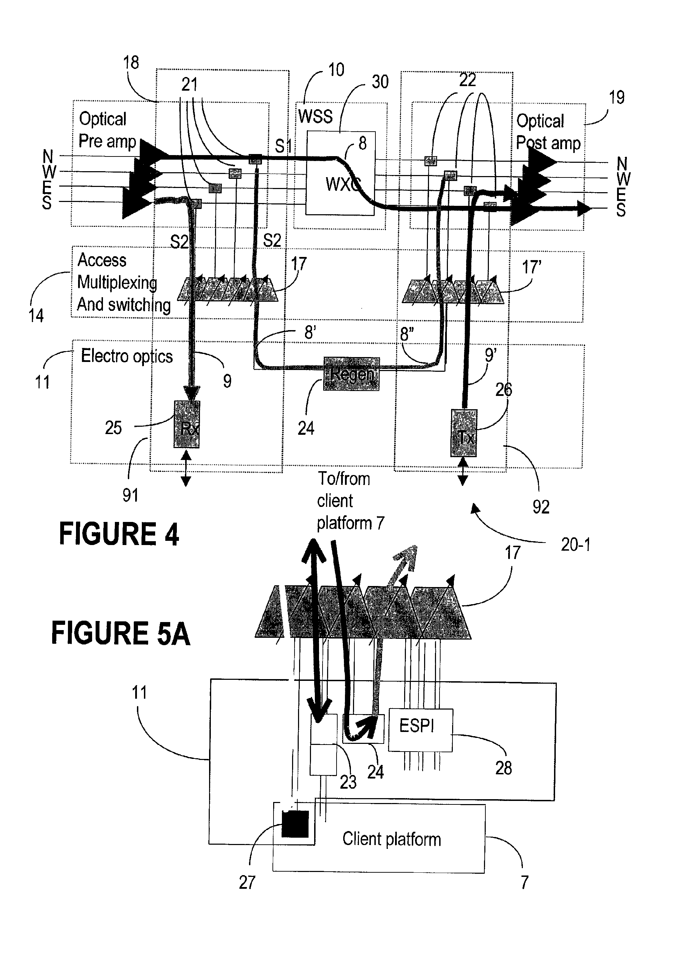

Figure 4 shows an example of a junction node **20-1** equipped with a wavelength switching sub-system WSS **10** that performs add/drop to the client service platform **7** and optical passthru to the next node. It is to be understood that other node configurations are available. For example WSS 10 may perform passthru only, while switching the channels as needed, or may perform add/drop only to direct all incoming traffic to client **7** and/or to add new traffic generated by client **7**. For simplicity, only the eastbound traffic is shown and described; it is to be understood that a similar description is applicable to the westbound traffic.

In Figure **4**, on the ingress side of node **20-1,** traffic encounters first a dividing stage **18,** which also performs optical pre-amplification and dispersion compensation for the DWDM optical signal entering the node. Thus, for each fiber entering the node, a first component **S1** of the respective input DWDM optical signal is routed to a Wavelength Cross Connect (WXC) **30** and a second component **S2** of the WDM signal is routed to access sub-system **14,** using optical power splitters **21.** WXC **30** switches the passthru channels **8** in the first component as needed from the input ports to the output ports, and blocks the drop channels **9** and the channels **8'** that require OEO for regeneration/wavelength conversion. In the case of a pure passthru node, there are no add/drop channels. Also, if no channel requires regeneration or wavelength conversion, the regenerators **24** are not used.

Stage **14** comprises a drop tree **91** that separates the ingress drop traffic from the second component, from where the drop channels **9** are directed to a respective broadband receiver **25** of the electro-optics system **11**, which converts the drop signals into an electronic format for use by client **7.** It is important to note that unit **17** may be a fixed demultiplexer with wavelength-specific ports, or a flexible demultiplexer, where the ports are assignable by wavelength. The flexible structure is preferred, but both are supported by the architecture of node **20-1.**

Drop tree **91** also separates form the second component the channels that need regeneration or wavelength conversion and direct those to electro-optics sub-system **11** for regeneration by regenerator **24.** In this way, OEO conversion is performed on a reduced number of channels, and only as needed. A pool of regenerators **24** is provided at certain sites only, and they are not wavelength specific, so that they can be used for any channel that needs regeneration. The regenerators **24** can also operate as transponders to change the channel wavelength as needed to avoid channel collision in the output DWDM signal.

On the output side of node **20-1,** an add tree **92** collects the add traffic **9'** (the fourth set of channels), the OEO processed traffic **8"** from the regenerators **24** and the passthru traffic **8** from the WSS **10** and multiplexes these channels into an output DWDM signal for each respective output port. Thus, the add traffic **9'** received from client 7 is converted into an optical format using tunable transmitters **26** of the electro-optics sub-system **11.**

In the access stage **14,** the add signals are combined with the regenerated passthru signals **8"** and thereafter amplified by post-amplifiers of a merging stage **19.** Again, multiplexer 17' may be fixed or flexible with respect to wavelength assignment.

As seen in Figure 4, add traffic **9'** and the regenerated passthru traffic **8"** are combined with the passthru channels **8** before amplification. It is to be understood that the number of add channels and the drop channels may or may not be equal, as long as the total number of channels on the line does not surpass the network capacity.

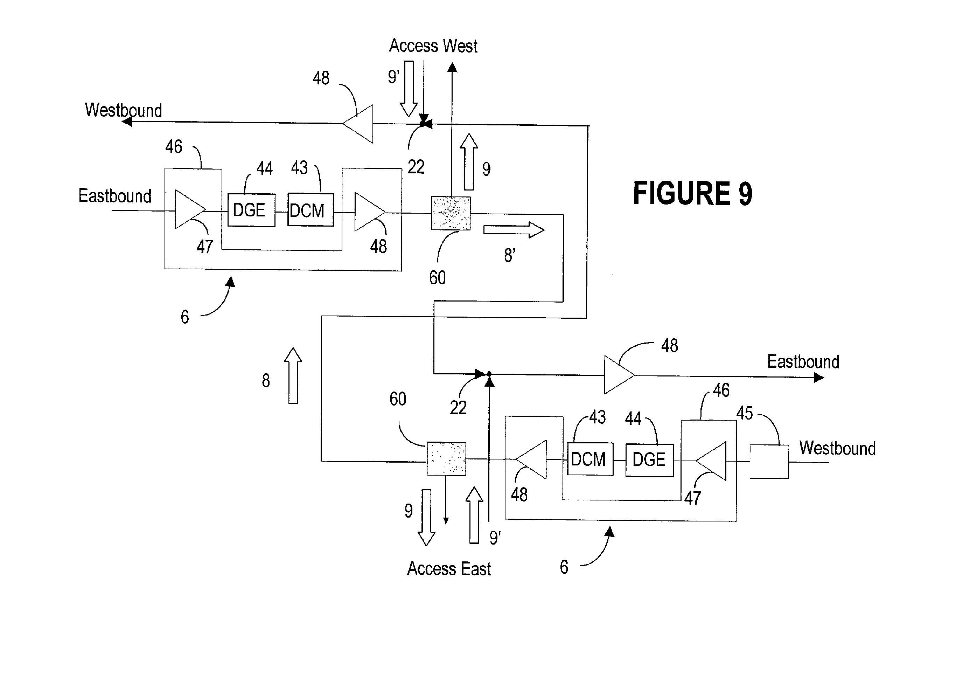

Wavelength switching subsystem **10** can be a wavelength cross-connect **30** as in Figure **4,** or may be an optical add-drop subsystem, as it will be seen later in connection with Figure 9.

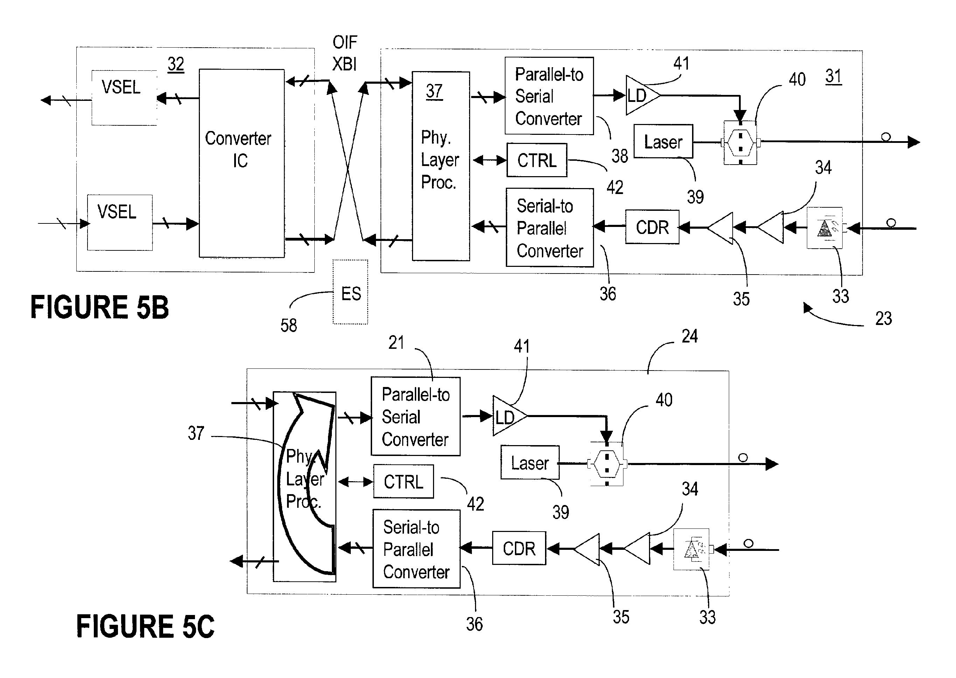

Figure 5A illustrates the electro-optic sub-system **11**, which performs on ramp of client signals from client platform **7** onto network **20.** On-ramp to the network is enabled by either compliant embedded transceivers **27** on the client platform **7,** or via a transponder **23,** shown in detail in Figure 5B. A transceiver comprises a receiver (Rx) and a transmitter (Tx) pair; the Rx recovers the client signal received from the optical network, and the transmitter (Tx) generates an optical carrier (wavelength, channel) and modulates the client signal over the carrier. A transponder **23** comprises a short reach Rx/Tx pair and a long reach Rx/Tx pair for converting short reach client signals to long reach capable optical signals. A regenerator comprises a Rx/Tx pair for OE conversion, signal conditlonlng/wavelength switching and EO conversion.

Electro-optics subsystem **11** also comprises a wavelength converter and regenerator **24,** shown in some detail in Figure 5C. Wavelength converter and regenerator **24** (called in short regenerator) performs OEO-based wavelength conversion in the network core, only for the channels that require regeneration or wavelength conversion, as determined by the SLS **15** and INOS **16.**

An enhanced services platform interface ESPI **28** uses electrical multiplexing and switching to enable 40Gb/s service carriage across network **20,** and electrical protection switching of services.

The electro-optics sub-system **11** features 1,500 km capable and 3,000 km capable optical reach, strong FEC, broad wavelength tunability for full wavelength assignment, and adaptive dispersion compensation.

The two basic EO interfaces configurations are the transponder **23** shown in Figure 5B and the regenerator **24** shown in Figure 5C. As much as possible, both use similar common equipment, namely an ultra long reach (ULR) building block **31.** The transceiver uses, in addition, a commercial short reach (SR) module **32.**

ULR building block **31** comprises, on the receive side a photodetector **33,** for converting the optical signal to an electrical signal, followed by two amplification stages **34** (pre-amplifier) and **35** (post-amplifier) and clock 8 data recovery block CDR. The electrical signal is then demultiplexed into a parallel signal by serial-to-parallel converter **36,** and applied to a Physical layer processing circuit **37.** Physical layer processing circuit **37** is responsible with framing/deframing the signal, stripping/adding overhead OH information, decoding the FEC information for correcting the errors in the incoming signal, directing the FEC decoded signals to the user (transponders/regenerators/client), and other operations specific to the line format.

On the transmit side, a parallel-to-serial converter **38** of ULR block **31** multiplexes the FEC encoded signals from the physical layer processing circuit **37** into a serial signal. A laser **39** generates the channel wavelength and external modulator **40** modulates the laser signal with the serial signal, using a laser driver **41.** ULR **31** is also provided with an embedded controller **42.**

As shown in Figure 5B, the transponder is implemented by connecting the SR module **32** to ULR building block **31,** using e.g. OIF XBI interconnect standard. This allows easy integration of any popular SR client interface **7** with ULR block **31.**

Regenerator **24,** illustrated in Figure 5C, is implemented by looping the received data back to the transmit interface at the XBI interface within the physical layer processing circuit **37.** This allows regenerator **24** to perform regeneration and/or wavelength conversion for a single, unidirectional data path.

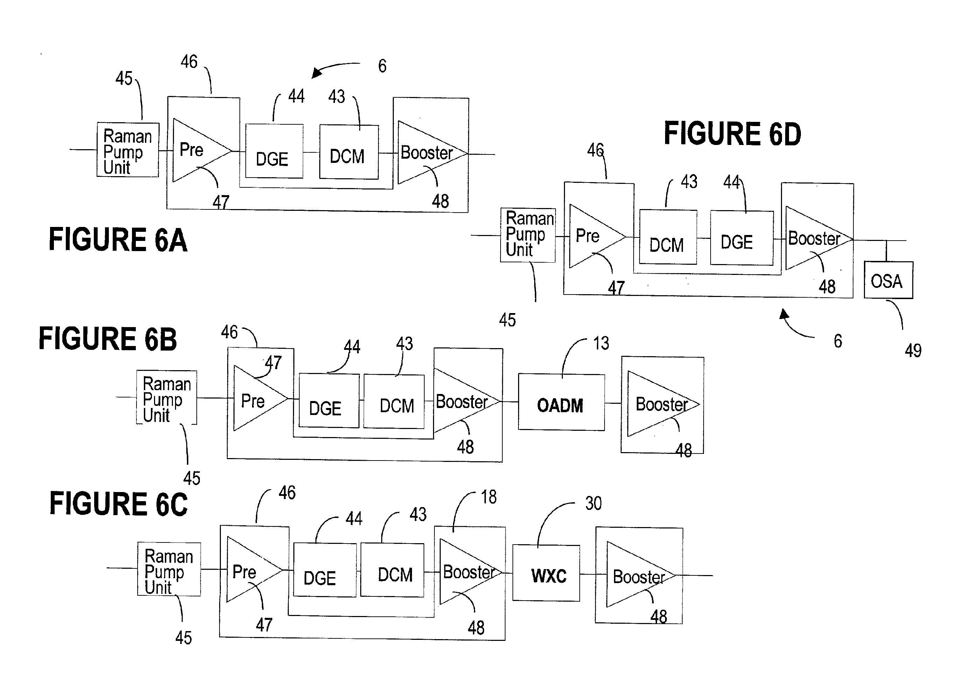

The optical line system **12** is shown in Figures 6A to 6D. This subsystem includes line amplifiers **6,** pre-amplifiers of dividing stage **18** and post-amplifiers of merging stage **19** and associated dispersion and power management equipment necessary for ultra-long haul propagation along the line.

Figure 6A shows a line amplifier configuration. The line amplification module of Figure 6A provides optical gain to overcome the loss incurred due to transmission fiber. Module **6** comprises a Raman section **45** employed in conjunction with an EDFA (erbium doped fiber amplifier) section **46** for optimal OSNR performance. The Raman section **45** is configured as a distributed counter-propagating preamplifier, the EDFA section **46** being configured as a multi-stage amplifier with mid-stage access.

The first stage of section **46** is a preamplifier **47** and the last stage is a booster **48.** The sections are also provided with Optical Service Channel (OSC) splitter/combiners and a transceiver (nor shown) to detect and add OSC channel operating at an independent wavelength. Other optical amplifier functionalities include analog and digital electronics for monitoring and control of gain stages, detection of upstream and downstream fibre cuts, shut-off mechanisms to avoid unsafe power levels, NE failure detection, etc.

An advanced fiber-based slope-matched dispersion compensation module (DCM) **43** and a periodic dynamic gain equalizer (DGE) **44** are provided in most configurations at the mid-stage access. DGE provides the capability to selectively attenuate wavelengths or groups of wavelengths to flatten the power spectrum and thereby improve performance of the optical system.

DCM **43** compensates for the dispersion accumulated by the multi-channel signal between the amplifier sites, and the DGE **44** is employed to ensure that an optimal power profile is maintained. DCM **43** is not required in line amplifier configurations where the network is built with dispersion managed cable (DMC), for sites without DGEs and in shorter spans.

Post-amplifier configurations are as well available. Figure 6B shows the amplifier configuration for an OADM sub-system **13** and Figure 6C shows the amplifier configuration for a WXC **30.** The optical amplifiers at these sites provide optical gain to overcome the loss incurred due to transmission fibre, before the channels are accessed for switching or add/drop. As seen in these figures, a booster post-amplifier **48** follows the respective OADM **13** or WXC **30** after add and switching, for amplifying the signal.

Power equalization is done on a per multiple amplifier modules. This is accomplished as shown in Figure 6D, by connecting an OSA (optical spectrum analyzer) **49** to the output of section **46.** Again, a DGE **44** is used in the mid-stage to flatten the power spectrum. The OSA **49** is used to monitor the required optical line parameters such as channel power, wavelength, and OSNR at the output of the amplifier. The information is then fed back to the DGE **44** to form an optical power control loop with the DGE being the mechanism equalizing the channel powers.

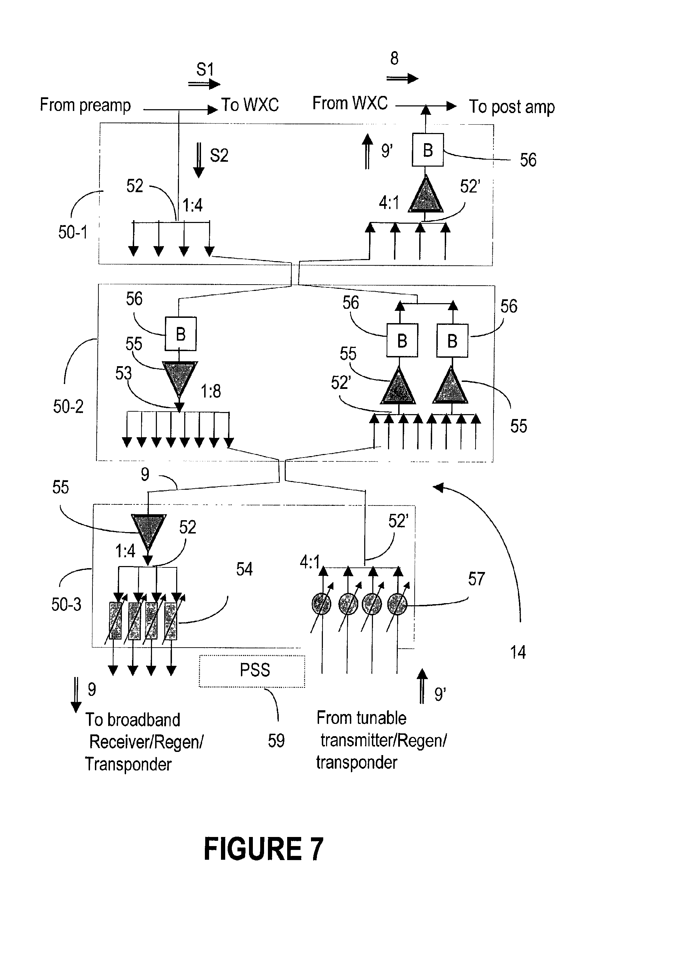

To allow wavelength assignment that is both fully flexible and cost-effective, the network **20** features an access structure based upon optical broadcast and select principles, shown in Figure 7. The access subsystem **14** performs demultiplexing and switching of the input DWDM signal(s) and multiplexing and switching of the output DWDM signal(s). Conventional WDM networks achieve this functionality with fixed wavelength division multiplexers (WDMs) where each port is 'colored', i.e. assigned to a specific wavelength. This conventional structure cannot provide true agility to the network, in that it requires manual reconnection of the lasers to the corresponding port of the mux/demux when the wavelength is changed.

On the drop side of the node, a part of the input DWDM signal (or multi-channels signal), i.e. the second component denoted with S2, is directed (split), from pre-amplifier **18** to the access sub-system **14,** as also seen in Figure 4. There are three access stages in the configuration shown in Figure 7. At the first access stage **50-1,** the second component is optically split 4 ways using a 1:4 power splitter **52,** to obtain four fractions, each comprising all the channels in the input DWDM signal. At second access stage **50-2,** each fraction is passed through a blocker **56** and amplified by a low power EDFA (amplet) **55.** Blockers are optical modules that allow only selected channels to pass through it, while blocking other channels. Amplets **55** are used to compensate for the loss in the blockers. The amplet **55** is followed by an 8-way split by splitter **53,** so that 8 instances of the blocked signal are available at the output of the second access stage **50-2.** Next, the blocked signal undergoes a second 4-way split by a splitter **52** in the third stage **50-3.** An amplet **53** is again introduced in the signal path to compensate for optical loss inherent in the splitters and other components. Before coupling to a receiver, a tunable filter **54** is used to select the desired wavelength for that connection. This drop tree allows any wavelength on the line to be switched to the desired receiver without any wavelength connectivity constraints. Some channels can be directed to a regenerator **24** for conditioning, and/or wavelength conversion.

Similarly, the add tree uses optical combiners **52'** and amplifiers **53** to allow signals inserted by the tunable transmitters to joint the line multiplex as shown. At the ingress of the add structure, EVOA (electronically-actuated variable optical attenuators) **57** are employed to slowly bring up new wavelengths into the system, to avoid gain transients in the amplets **55,** and to shut out wavelength ports that are not in use or are faulty. The blockers **56** are used in the add tree to filter out the laser and amplifier noise that would otherwise accumulate as the signals are combined. Furthermore, the blocker **56** at the second stage **50-2** is used to block all wavelengths that are not destined for that branch of the tree. This allows more efficient use of the amplifier power below the blocker. The blocker is also used to manage the power profile of the propagating wavelengths.

It is important to note that the access structure, while allowing unconstrained wavelength assignment, is coupled inflexibly to a specific fiber transmission system. Thus, in the embodiment of Figure 7, access ports are directionally assigned to a fiber and cannot be switched to another fiber without manual reconnection to access ports for the desired direction.

Directional assignment can be supported by one or a combination of:
1) introducing electrical switching **58** between the short reach client interface **32** and the long reach interfaces **31** (see Figure 5B) to allow direction of signals to the correct access structure,
2) introducing a photonic space switch PSS **59** to flexibly couple transmitters and receivers to multiple access ports (see Figure 7),
3) use wavelength switching technology to switch among access structures.

The cascading structure of Figure 7 allows modular growth to up to 128 access ports. The line system accommodates now up to 100 wavelengths. This dilation allows a degree of blocking in the access structure, which would otherwise prevent full access to the full set of wavelengths on the line. Blocking may occur if switching is introduced in the access structure for directional assignment, or if underutilized remote systems are coupled into the access structure at the second tier.

The access multiplexing and demultiplexing structure is somewhat different from systems with smaller numbers of channels. For example, the second access stage **50-2** is not provided for below 16 add/drop wavelengths. It is also to be understood that an access structure for systems with a larger number of channels may be also designed based on the same principle as shown in Figure 7 and described above.

Figure 4 illustrates that after the pre-amplifier, the multi-channel signal is broadcast to both the access structure **14** and the input ports of the WXC **30.** WXC **30** receives the first component S1 of the DWDM input signal and switches the passthru channels from input ports to output ports in a wavelength selectable manner, while blocking the drop channels and the channels that need OEO conversion. It also offers per channel attenuation for power shaping on through traffic.

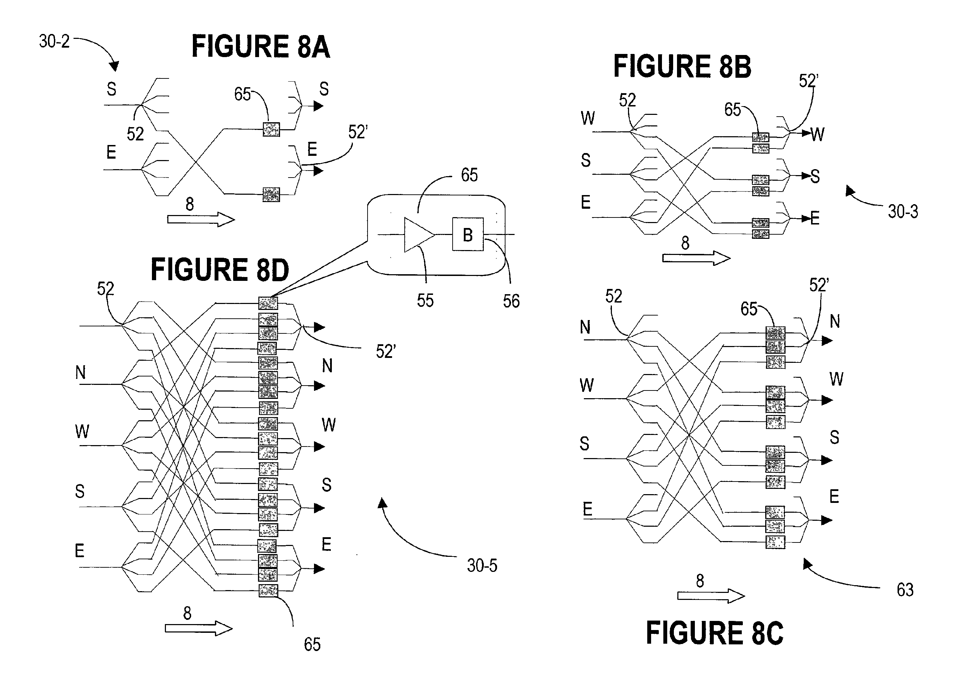

Figures 8A to 8D illustrate various implementations of the WXC **30.** Thus, Figure 8A shows a two-way wavelength switch, Figure 8B illustrates a three-way switch, Figure 8C, a four way switch, and Figure 8D, a five way switch. Each first component is broadcast with a further 4-way optical splitter **52.** Switching is again performed using a broadcast and select structure. Thus, each splitter **52** is coupled to a switching element **65** which comprises a blocker **56,** which selectively allows wavelengths through, and an EDFA **55,** to compensate for the losses in the WXC **30.** The output of the switch element **65** is combined to the WXC output port with a 4:1 optical power combiner **52'.** For each input-output port combination there is a blocker **56** which allows wavelengths which are switched through that path to pass, and blocks all other wavelengths. With 1:4 splitters and combiners, a 5x5 switch can be supported as shown, since there is no requirement for a loop-back connection. The switch **30** can be depopulated as shown for 2x2, 3x3 and 4x4 applications.

Some traffic generating sites, i.e. sites exchanging traffic with client platforms **7** in backbone fiber networks (see Figure 3A) have only two long haul fiber routes connecting them to the rest of the network, and have a low proportion of add/drop traffic. Network **20** provides an optical add/drop multiplexer (OADM) subsystem **13** for these sites, to optimize the cost and performance. Figure 9 shows an embodiment of add/drop subsystem **13.**

The add/drop subsystem **13** first amplifies both westbound and eastbound traffic using a respective line amplifier **6,** followed by a COADM (configurable optical add drop module) **60.** COADM **60** selectively switches individual wavelength from input to output or to the access sub-system **14,** as denoted on Figure 9 with "Access West" and "Access East". The passthru traffic **8, 8'** is amplified by a respective booster **48.**

An optical power combiner **22** is employed for the added wavelengths **9',** for both East and West directions.

The physical and logical architecture of network **20** allows significant new network functionality in the photonic layer. The mode of operation of network **20** is described next in connection with Figures 3A to Figure 9.

### Lighting a Wavelength

A key characteristic of network **20** is the ability to establish a lightpath end-to-end without manual intervention. A request for a lightpath connection is initiated from the INOS **16** or through a UNI request. The routing layer then selects an optimal wavelength and path through the network, including regeneration and wavelength conversion, whenever required. The lightpath is established automatically by wavelength tuning at the transmitter and appropriate switching in the access structures at the ingress and egress sites, intermediate OADMs and WXCs. Attenuation states in the blockers and EVOAs allows new connections to be brought up without switch-induced transients that may interrupt existing traffic. For light-paths requiring regeneration or wavelength conversion, pre-connected pools of regeneration equipment may be switched in automatically.

The current topology of the network is discovered using a novel trace feature. Thus, all fiber connections between cards feature optical trace channel communication that allows cards to recognize connections and report those to the network element controllers and to the INOS **16.** In the preferred embodiment, the traces are provided as 1310nm signals, and can be communicated on tandem fibers, or multiplexed onto the same fiber as the traffic-carrying wavelengths.

Furthermore, SLS (smart line system) **15** collects information about the physical parameters of a path, and informs INOS **16** that a certain span is not available due to an increased dispersion threshold, etc. To this end, network **20** is equipped with a large number of Optical Spectrum Analyzers (OSAs) **49** to provide visibility of signal power levels and noise levels. An OSA is shared using an 8:1 optical switch coupler to in-line power taps at a number of points in the network. These taps are used in control loops for transmitter power, blocker and dynamic gain equalizer control, EVOA settings and Raman amplifier control. Fault monitoring also rely on this information to localize failures in the network.

End-to-end photonic switching allows certain limited fault recovery options. When a fiber cut or equipment failure occurs, the lightpath is reestablished using remaining available resources (recovery rather than protection switching). This "redial" can be made on a best effort basis, or the system can establish dedicated resources, based on the QOS required for the respective lightpath. It is noteworthy that since the access structure at the switch site is 'hardwired' to a specific direction as shown in Figure 4, failures in the first or last leg of the connection will not be recoverable in this manner for this embodiment. If one of the options for directional assignment are employed (i.e. switch **58,** or space switch **59** or switch among access structures), then this constraint is relieved.

For services requiring very high availability, where client interfaces have automated protection switching or alternative redundancy schemes, network 20 allows the user to request that those connections be diversely routed. The diversely routed connections can additionally benefit from 'redial' recovery, allowing ultra-high availability services. Nonetheless, for embodiments with electrical switching and/or directional switching **59** in the access structure, a more full-feature set of network protection configurations is available.

### Optical Path Maintenance

The optical layer of network **20** requires a different design approach than the traditional pt-pt WDM systems, as there is no start and stop location for all the wavelengths. No assumptions can be made about the OSNR or distortion/dispersion history of adjacent wavelengths being similar. In addition, wavelengths need to be added and dropped with a minimal impact on existing channels. This leads to the following design principles:
- Power equalization is done only on optical channel power, not on relative OSNR.
- Dispersion must be compensated periodically along the length of the optical path, and the distance between flexibility points **30** (i.e. WXCs and/or OADMs) must be an integer multiple of this period.
- Pre and post dispersion compensation (if required) must be done on a channel by channel basis on the client side of the WSS.
- Channel to channel interactions are minimized by reducing the optical launch power.

Two types of power management are required. The first type is per optical path power management through a switch and for add/drop at either a switch or OADM. The second type is spectral power adjustment in the optical line.

The per optical path adjustment is accomplished through the use of the variable loss feature of the blocker **56.** The spectral equalization is accomplished by a combination of the EDFA/Raman gain dynamics and dynamic gain flattening filters (DGEs) embedded in the EDFAs. Spectral power management is used to compensate for gain/loss variations in the optical path such as amplifier ripple/tilt, systematic mux/demux loss variation, spectral variation in the loss of the transmission fiber and/or dispersion compensation elements. The DGEs can be eliminated entirely in cases where there are not many optical amplifiers between switch/OADM nodes.

The control feedback for both types of optical power management is via optical spectrum analyzers (OSAs) distributed throughout the system. The objective of the optical power control loops is to control the per channel power to conform to a predefined power per channel mask (nominally flat but may have some pre-emphasis to compensate for fiber loss variations). Control on per channel power, rather than relative OSNR is required, as each channel will have an arbitrary OSNR dependant on its distance from source. This control scheme allows the additive noise from each span to be the same for each wavelength. The output power mask can be selected based on the fiber type, and it may also be actively optimized by the system.

In order to minimize the cost of the OSAs a single OSA to control several amplifiers and each amplifier adjusts its DGE based on its measured gain to achieve a nominally flat spectral response. The OSA could then measure the actual spectral response and distribute the correction equally over the EDFAs. If DGEs are not included at each amplifier site, then VOAs will need to be included to compensate for amplifier gain tilt due to span loss variations.

### Wavelength Plan

In selecting a wavelength plan, the cost of optical amplification must be considered, as optical amplifiers increase significantly the network cost. Therefore, there is value in increasing the capacity per amplifier. The trade-off between capacity per amplifier and the system reach leads to the selection of a single band amplifier with as much spectrum as feasible.

The choice between C-band (1527-1565nm) and L-band (1567-1610nm) depends on the target fiber type. L-band works on all fiber types, while the capacity of a C-band solution on TW™ classic and TWplus™ fiber types is significantly reduced. The L-band solution has the further advantages of improved performance due to higher local dispersion and lower attenuation. On the other hand, component availability is lower for the L-band. The wavelength plan selected for network **20** provides approximately 100 wavelengths on a 50 GHz grid from 1567 to 1610 (i.e. L-band) which yields approximately 1 Tb/s per amplifier.

Another factor to consider in selecting a wavelength plan is the end-to-end filter transfer function. There are up to 20 filters cascaded in an optical path, such as the wavelength blocker elements used in the add/drop tree and switch nodes, and the final tunable filter used for the demultiplexing. The resultant filter shape of the concatenated filters must be adequate to pass the 10 Gb/s signal with minimal degradation. In order to mitigate the impact of this the Tx wavelength needs to be tuned to maximize the received Q.

### Dispersion Management

Dispersion management is the most critical and operationally difficult aspect of ultra long reach systems. In general dispersion maps must be customized to fiber types and the tolerances are such that insitu measurement and component selection are required, significantly complicating the system deployment.

Dispersion management in network **20** is done on an optical link basis (i.e. between flexibility points). Each link must be compensated so that the net dispersion per km meets the design target. Wavelengths that traverse less than the maximum distance will see a smaller total dispersion, however will have higher Q values and so can tolerate a slightly non-optimal dispersion value.

100% slope compensated static dispersion compensators DCM **43** are provided on each amplifier span (except for the dispersion managed cable case). These are chosen to bring the net dispersion per km nominally to the desired value. At the end of an optical link (i.e. prior to the demux in front of the WXC) a tunable dispersion compensator is used to null out any variations in the match between the static compensators and the fiber on that link. Provisions are made for adding tunable compensators on the drop and add paths of an OADM node. Preferably, the tunable dispersion compensator has a variable dispersion slop. If static compensators are used, they need to be selected by measuring the net dispersion of the link. The network is also provided with dispersion measurement capability. It is a requirement that all wavelengths meet the dispersion window set for each link.

In general, post and pre compensation are not required. If pre/post compensation is however a requirement for some applications, it must be done on the add/drop side of the WXC, on a per optical path basis (i.e. wavelength or band). For cases where 100% slope compensated DCMs are not available, a slope correction may be done by utilizing a tunable dispersion compensator with a fixed, but selectable slope.

If the optical path continues on after the drop side of the switch/OADM, as for example in the case of a distributed POP or a remote node off an OADM, these spurs must be treated as separate optical links and the dispersion and optical power must be managed on each such optical link so that the net dispersion per km target is met.

Preferably, each optical link of network **20** uses a single fiber type. The dispersion map will thus be consistent on each optical link. Since there are multiple fiber types in a given network, it is a requirement that different fiber types be supported on either side of a WXC, but not an OADM. Thus, an optical path may traverse network segments with at least two different fiber types. Another mixed fiber type scenario that must be supported is that of a fiber reseller where the spurs (0 to 30 km long) are one fiber type (typically SMF) and the transmission fiber is another (typically LEAF). In this case, the dispersion compensators will be selected to meet the net dispersion targets of the transmission fiber type and the resultant slope mismatch on the spurs will be ignored. This will have a small negative impact on the reach in these applications.

### Modulation Format

The preferred modulation formats are NRZ and RZ options. A discreet version of the RZ transmitter and an NRZ T/R module may be used, as appropriate.

The line format includes an out of band forward error correction (FEC), used to reduce the required system Q. One variant may use a 7% FEC based on the OTN standard which has a coding gain of 5 to 6 dB (i.e. a raw Q of 4 for a BER corrected of 10⁻¹⁵). Other variants may use more aggressive FEC with an overhead in the range of 12% to 25% and a coding gain of 9 to 12 dB (i.e. a raw Q of 2 to 3 for a corrected BER of 10⁻¹⁵).

## Claims

1. A WDM network for routing a channel from an input node to an output node through an intermediate switching node connected along a transmission path, comprising:
at said input node, means for multiplexing said channel into a first multi-channel optical signal and transmitting said first multi-channel optical signal over said path;
at said intermediate node, a wavelength switching subsystem WSS for routing said channel from said first multi-channel optical signal into a second multi-channel optical signal without OEO conversion, and transmitting said second multi-channel optical signal over said path; and
at said output node, means for demultiplexing said channel from said second multi-channel optical signal.

2. A network as claimed in claim 1, further comprising an optical line sub-system for connecting all nodes of said WDM network, for conditioning a multi-channel signal traveling on said path, said optical line subsystem comprising one or more optical amplification modules, distributed at one or more amplifier sites.

3. A network as claimed in claim 2, wherein an optical amplification module comprises a Raman amplifier configured as a distributed counter-propagating preamplifier, an erbium doped fiber amplifier EDFA configured as a multi-stage amplifier with mid-stage access and means for maintaining an optimal power profile for said multi-channel optical signal.

4. A WDM network as claimed in claim 2 or 3, further comprising:
an optical service channel connecting all said nodes and said line subsystem; and
an intelligent network operating system for selecting said transmission path, controlling said input node, said output node, said intermediate nodes and said line subsystem to route traffic along said path, and monitoring and controlling performance of said path over said optical service channel.

5. A WDM network as claimed in claim **4,** further comprising:
an optical trace subsystem distributed on all card-packs of said WDM network for gathering network topology information; and
a trace connection for communicating said network topology information between said optical amplification modules, said network nodes and said intelligent network operating system, for network topology auto-discovery.

6. A network as claimed in claim 4 or 5, further comprising a plurality of optical spectrum analyzers OSA, each connected to multiple selected points at said amplifier sites and said nodes, for monitoring signal power, gain and wavelength of the channels in said multi-channel signal and communicating same to said intelligent network operating system for performance monitoring of said path.

7. Apparatus for a node of a WDM network, the apparatus comprising:
an input port for receiving a first multi-channel optical signal, and an output port for transmitting a second multi-channel optical signal;
a broadband optical receiving terminal for receiving a drop channel and recovering a drop user signal from said drop channel;
a drop tree for broadcasting said first multi-channel optical signal over a plurality of drop routes, selecting a drop route and routing said drop channel from said input port to said broadband optical receiving terminal; and
a wavelength switching subsystem WSS for routing a passthru channel from said first multi-channel optical signal into said second multi-channel optical signal, in optical format.

8. Apparatus for a node as claimed in claim 7, further comprising:
a tunable transmitting terminal for modulating an add user signal over an add channel; and
an add tree, for routing said add channel from said tunable transmitting terminal into said second multi-channel optical signal.

9. Apparatus for a node as claimed in claim 7 or 8, further comprising:
a regenerator for receiving from said drop tree a second passthru channel of said first multi-channel optical signal, OEO processing said second passthru channel, and outputting an OEO processed passthru channel; and
an add tree for routing said OEO processed passthru channel from said regenerator into said second multi-channel optical signal.

10. Apparatus for a node as claimed in any of claims 7 to 9, wherein said drop tree comprises:
a first drop stage for dividing said first multi-channel signal into a first component signal and a second component signal and for dividing said second component signal into 'k' first-stage fractions;
a second drop stage for blocking a set of channels from each said first-stage fraction, to provide a first filtered fraction, and further dividing each said first filtered fraction into 'm' second-stage fractions;
a third drop stage for blocking a subset of channels from each said second-stage fraction, to provide a second filtered fraction, and directing each said second filtered fraction to 'p' tunable filters for selecting said drop channel.

11. Apparatus for a node as claimed in claim 8, or in claim 9 or 10 when dependent on claim 8 wherein said add tree comprises:
a third add stage for grouping 'p' add channels into a second-stage fraction, and providing m such said third-stage fractions;
a second add stage for combining said 'm' second-stage fractions into a first-stage fraction and blocking all channels that do not belong to said first-stage fraction, and providing 'k' said first-stage fractions; and
a first add stage for combining said 'k' second-stage fractions into said second multi-channel signal.

12. Apparatus for a node as claimed in claim 8 or any of claims 9 to 11 when dependent on claim 8, wherein said broadband optical receiving terminal and said tunable transmitting terminal are assembled in a colorless transceiver.

13. Apparatus for a node as claimed in any of claims 7 to 12, wherein said WSS is a wavelength cross-connect WXC with 'x' input ports and 'w' output ports, comprising:
for each input port, a line splitter for broadcasting a respective first multi-channel optical signal associated with said input port, over 'y' input connections;
for each output port, a line combiner connected to said output port for assembling a respective second multi-channel optical signal associated with said output port, from 'y' output connections;
x · y switching elements, a switching element provided on a route linking an input connection to an output connection for selectively allowing an associated passthru channel to pass along said route;
wherein said routes provide full connectivity between each input connection and all output ports, and each output connection and all input ports, and where 'y' is the maximum number of passthru channels in any input multi-channel optical signal.

14. Apparatus for a node as claimed in claim 13, wherein said switching element comprises a blocker for selectively allowing a wavelength of said associated passthru channel to pass from said input port to said output port.

15. Apparatus for a node as claimed in claim 8 or any of claims 9 to 12 when dependent on claim 8.wherein said WSS is an optical add-drop multiplexer, comprising:
a configurable optical add/drop multiplexer COADM for routing a passthru channel from said first multi-channel optical signal into said second multi-channel optical signal and routing said drop channel to said drop tree; and
a combiner for inserting said passthru channel and an add channel received from said add tree into said second multi-channel optical signal.

16. A method of routing a communication channel from an input node to an output node through an intermediate switching node connected along a path comprising:
at said input node, multiplexing said channel into a first multi-channel optical signal and transmitting said first multi-channel optical signal to said intermediate node;
at said intermediate node, switching said channel from said first multi-channel optical signal into a second multi-channel optical signal without OEO conversion, and transmitting said second multi-channel optical signal to said output node;
at said output node, demultiplexing said channel from said second multi-channel optical signal; and
controlling operation of said input node, said output node and said intermediate node at the physical layer using a smart line system SLS and at the network layer using an intelligent network operating system INOS.

17. A method as claimed in claim 16, wherein said step of controlling comprises:
providing a predefined power per channel mask;
measuring the optical power of said channel in selected points along said transmission path; and
adjusting the gain of said channel for obtaining a power profile for said channel substantially similar to said mask.

18. A method as claimed in claim 17, wherein said step of adjusting is performed using gain and power control loops.

19. A method as claimed in any of claims 16 to 18, wherein said INOS switches said channel from said input port to a drop port for regeneration, and switches the regenerated channel to said output port when said channel cannot reach said power profile.

20. A method as claimed in any of claims 16 to 19, further comprising, for adding a new channel between said input node and a second output node connected on said path downstream from said intermediate node:
establishing a target reference path and setting-up the performance parameters for said reference path and threshold values for said performance parameters;
connecting a new input client interface to said input node and connecting a new output client interface to said second output node;
remotely requesting activation of said new channel by a point and click operation on a graphical user interface GUI of said INOS;
at said INOS, attempting to establishing a direct all optical route for said new channel, based on current network topology information and current optical layer performance information;
providing wavelength conversion at said intermediate node, if said direct all optical route is not available;
providing signal regeneration if said direct all optical route is available, but current optical layer performance information indicates that an updated optical layer performance for said new channel falls below said threshold values; and
lighting said optical path by wavelength tuning a transmitter at said new interface and appropriate switching at said intermediate node, under supervision of said INOS.

21. A node for a WDM network comprising the apparatus of any of claims 7 to 15, or arranged to carry out the method of any of claims 16 to 20.

22. A method of offering to users a data transmission service over the WDM network of any of claims 1 to 6, or over the node of claim 21.

23. A method of transmitting data by a user over the WDM network of any of claims 1 to 6, or over the node of claim 21.
